## Europäisches Patentamt

## European Patent Office

## Office européen des brevets

(11) Veröffentlichungsnummer : **0 388 704 B1**

(12)

# EUROPÄISCHE PATENTSCHRIFT

(45) Veröffentlichungstag der Patentschrift :
**14.06.95 Patentblatt 95/24**

(51) Int. Cl.⁶ : **G02B 13/08**

(21) Anmeldenummer : **90104267.1**

(22) Anmeldetag : **06.03.90**

(54) **Anamorphotischer Vorsatz für Aufnahme- oder Wiedergabezwecke zur Verwendung mit einem Grundobjektiv.**

(30) Priorität : **21.03.89 DE 3909203**

(43) Veröffentlichungstag der Anmeldung :
**26.09.90 Patentblatt 90/39**

(45) Bekanntmachung des Hinweises auf die
Patenterteilung :
**14.06.95 Patentblatt 95/24**

(84) Benannte Vertragsstaaten :
**AT BE CH DE FR GB IT LI NL**

(56) Entgegenhaltungen :
DE-A- 3 629 438
US-A- 3 041 935

(56) Entgegenhaltungen :
US-A- 3 682 533
PATENT ABSTRACTS OF JAPAN, vol. 13, no.
159 (P-858)(3507), 18. April 1989 ; & JP-A-63 316
816

(73) Patentinhaber : **ISCO-OPTIC GMBH**
**Robert-Bosch-Breite 10**
**D-37079 Göttingen (DE)**

(72) Erfinder : **Lisziewicz, Antal, Dr.**
**Auf der Lieth 42**
**D-3400 Göttingen (DE)**

(74) Vertreter : **Rehberg, Elmar, Dipl.-Ing.**
**Patentanwalt**
**Postfach 31 62**
**D-37021 Göttingen (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf einen anamorphotischen Vorsatz für Aufnahme- oder Wiedergabezwecke zur Verwendung mit einem Grundobjektiv, mit einem ersten, im wesentlichen zur Vergrößerung in einer ersten Richtung dienenden Teilsystem und einem zweiten, im wesentlichen zur Vergrößerung in einer zur ersten Richtung senkrecht stehenden Richtung dienenden Teilsystem, wobei das erste Teilsystem eine vordere, positive Linsengruppe und eine hintere, negative Linsengruppe und das zweite Teilsystem eine vordere, negative Linsengruppe und eine hintere, positive Linsengruppe enthält. Ein solcher anamorphotischer Vorsatz kann entweder für Aufnahmezwecke, also als Bestandteil einer Kamera oder für Wiedergabezwecke, also als Bestandteil eines Projektionssystems, eingesetzt werden. In beiden Fällen dient der Vorsatz dazu, in zwei aufeinander senkrecht stehenden Richtungen, insbesondere der horizontalen und der vertikalen Richtung, unterschiedliche Vergrößerungen zu erhalten. Eine Linsengruppe kann auch aus einer einzigen Linse bestehen.

Die US-PS 3 041 935 zeigt einen anamorphotischen Vorsatz der eingangs genannten Art. Der Vorsatz ist aus zwei Teilsystemen zusammengesetzt. Das erste Teilsystem hat eine anamorphotische Wirkung in der ersten Richtung. Das zweite Teilsystem hat eine anamorphotische Wirkung in der zweiten Richtung, die auf der ersten Richtung senkrecht steht. Das erste Teilsystem beginnt mit einer zerstreuenden Linse als vordere Linengruppe und endet mit einer Sammellinse als hintere Linsengruppe. Das Teilsystem bildet ein afokales System. Das zweite Teilsystem beginnt als vordere Linsengruppe mit einer positiven zylindrischen Linse, also einer Sammellinse, und endet als hintere Linsengruppe mit einer negativen Linse. Auch das zweite Teilsystem ist afokal.

Die beiden Teilsysteme ergeben jeweils eine unterschiedliche Vergrößerung in der jeweiligen Richtung. Der anamorphotische Faktor ergibt sich aus dem Verhältnis der Vergrößerungen in diesen beiden Richtungen. Wenn die vordere Linsengruppe des zweiten Teilsystems aus einer einzigen Linse besteht, also nicht in zwei Linsen aufgeteilt ist, besteht keine Möglichkeit der Fokussierung. Der so ausgebildete Vorsatz kann nur für eine feste Entfernung genutzt werden. Wenn jedoch die vordere Linsengruppe des zweiten Teilsystems in zwei Zylinderlinsen aufgeteilt ist, ergibt sich eine Fokussiermöglichkeit. Die Aufteilung der vorderen Linsengruppe des zweiten Teilsystems ist jedoch an die Bedingung geknüpft, daß der Luftabstand der beiden Zylinderlinsen der vorderen Linsengruppe des zweiten Teilsystems durch den Luftabstand zwischen der vorderen Linsengruppe und der hinteren Linsengruppe des ersten Teilsystems bestimmt wird. Dann ist es möglich, die zwei Zylinderlinsen, da sie sich an der gleichen Stelle befinden, zu einer sphärischen Linse zusammenzufassen, da sie in der Brennweite übereinstimmen. Das Grundobjektiv muß nachstellbar sein. Die Linsen beider Teilsysteme haben jedoch nicht nur in der einen gewünschten Richtung eine Wirkung, sondern zwangsläufig auch in der anderen Richtung. Die dadurch entstehenden Bildfehler sind sehr schwer korrigierbar. Die Korrektur ist außerdem auf kleine Eintrittspupillen beschränkt. Wenn der Durchmesser der Eintrittspupille des Grundobjektivs größer als 30 mm ist, dann ist der Vorsatz nicht mehr zu korrigieren, es sei denn, der Vorsatz ist länger als 300 mm. Dieser Aufwand ist jedoch zu groß, so daß dieses System für größere Eintrittspupillen nicht nutzbar ist. Ein weiterer Nachteil besteht darin, daß sich bei der Ausführungsform, die fokussierbar ist, der anamorphotische Faktor, nämlich das Verhältnis der Vergrößerungen in der einen zu der anderen Richtung oder das Verhältnis der Brennweiten in der einen zu der anderen Richtung sehr ändert. Die Veränderung des anamorphotischen Faktors beim Fokussieren sollte jedoch möglichst gering sein.

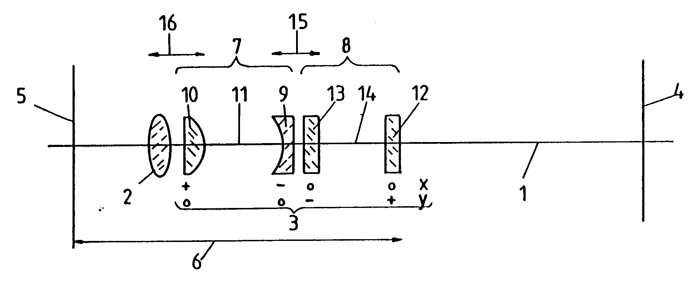

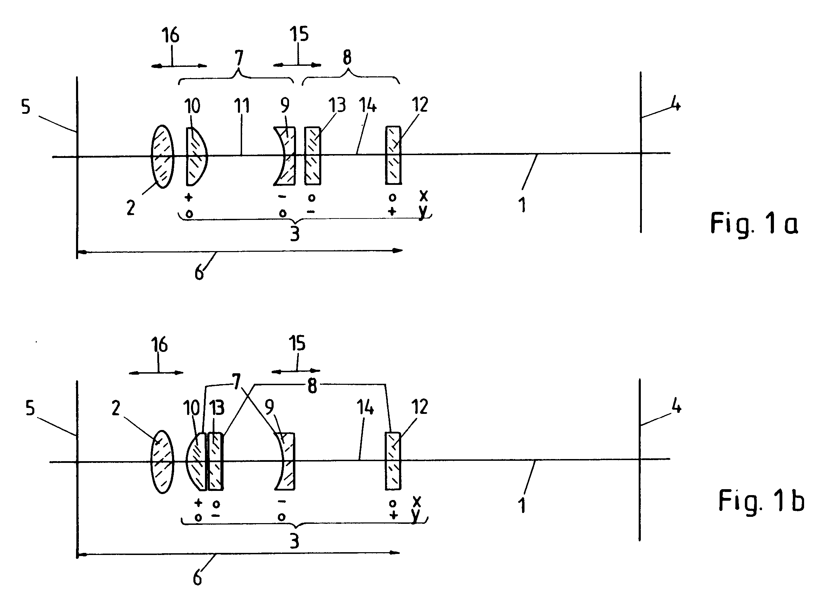

Aus der DE-OS 36 29 438 ist ein anamorphotischer Vorsatz für ein Grundobjektiv bekannt, bei dem ein anderes Prinzip Anwendung findet. Es ist ein erstes Teilsystem vorgesehen, bei welchem sphärische Linsen Verwendung finden, so daß die Eigenschaften in beiden aufeinander senkrecht stehenden Richtungen gleich sind. Dieses Teilsystem aus sphärischen Linsen ist einem zweiten Teilsystem zugeordnet, welches die Wirkung des ersten Teilsystems in nur einer der beiden Richtungen beseitigt. Der Vorteil dieses Prinzips liegt darin, daß die Fokussierung durch den anamorphotischen Vorsatz gegenüber dem Grundobjektiv möglich ist, ohne daß das Grundobjektiv nachgestellt werden muß. Ein weiterer Vorteil dieses Prinzips besteht darin, daß in der einen Richtung keine Vergrößerung resultiert, also hier eine Abbildung 1:1 erfolgt. Damit erbringt dieser anamophotische Vorsatz in dieser Richtung nur geringe Bildfehler, die insoweit vernachlässigbar sind. Es müssen nur die Bildfehler in der anderen Richtung korrigiert werden. Nachteilig an diesem Prinzip ist, daß die Korrektur der Bildfehler nur für kleine Bildwinkel erfolgen kann.

Der Erfindung liegt die Aufgabe zugrunde, einen Vorsatz der eingangs beschriebenen Art zu schaffen, bei dem die Bildfehler auch für größere Bildwinkel korrigierbar sind.

Erfindungsgemäß wird dies durch die Merkmale des kennzeichnenden Teils von Anspruch 1 erreicht.

Die vorderen Linsenguppen und die hinteren Linsengruppen der beiden Teilsysteme werden nicht mehr ineinandergeschachtelt angeordnet, wie dies beim Stand der Technik aufgezeigt ist, sondern jedes Teilsystem mit seiner vorderen und seiner hinteren Linsengruppe bleibt gemäß einer ersten Möglichkeit beieinander, wobei die vordere Linsengruppe von der hinteren LInsengruppe in jedem Teilsystem durch einen von Null verschiedenen Luftabstand getrennt ist. Auf der dem Objekt zugekehrten Seite des Vorsatzes ist somit das erste Teilsystem komplett angeordnet, dessen vordere Linsengruppe positiv ist, also aus einer oder mehreren Linsen besteht, die insgesamt im wesentlichen sammelnde Eigenschaften aufweisen, während nachfolgend die hintere Linsengruppe des ersten Teilsystem angeordnet ist, welches aus einer oder mehreren Linsen besteht, die negative Wirkung, also im wesentlichen zerstreuende Eigenschaften, aufweisen. Erst nach diesem ersten Teilsystem ist das zweite Teilsystem angeordnet, dessen vordere Linsengruppe negativ und dessen hintere Linsengruppe positiv ausgebildet ist. Dieses zweite Teilsystem ist somit auf der Seite des Vorsatzes angeordnet, die dem Grundobjektiv und damit der Bildebene zugekehrt ist. Dadurch, daß die beiden Teilsysteme jeweils erhalten bleiben und in ihrer Anordnung durch Abschnitte des anderen Teilsystems nicht gestört werden, ist es möglich, in einfacher Weise eine Bildfehlerkorrektur durchzuführen, weil die Korrektur innerhalb eines Teilsystems auch nur auf die Wirkungen hinsichtlich der einen Richtung abgestimmt ist, in der das jeweilige Teilsystem seine Wirkung entfaltet. Mit anderen Worten beeinflußt die Bildkorrektur in dem einen Teilsystem die Bildkorrektur in dem anderen Teilsystem nicht wesentlich. Diese unabhängige Bildfehlerkorrektur in der einen Richtung und in der anderen Richtung ist erheblich leichter durchzuführen als eine gemeinsame Bildfehlerkorrektur, die sich auf beide Richtungen zugleich auswirken muß, wie dies im Stand der Technik der Fall ist. Die prinzipiell gegenüber dem Stand der Technik andere Anordnung der beiden Teilsysteme zueinander, nämlich die Voranschaltung des ersten Teilsystems vor dem zweiten Teilsystem, aus der Richtung des Grundobjektivs gesehen, erbringt überraschenderweise den weiteren Vorteil, daß eine Fokussierung möglich ist, nämlich durch gemeinsames Verschieben der hinteren Linsengruppe des ersten Teilsystems und der vorderen Linsengruppe des zweiten Teilsystems relativ zur Bildebene. Dabei wird die hintere Linsengruppe des zweiten Teilsystems und das Grundobjektiv nachgeführt. Dies kann über eine Steuerkurve in Abhängigkeit von der gemeinsamen Verschiebung der hinteren Linsengruppe des ersten Teilsystems und der vorderen Linsengruppe des zweiten Teilsystems geschehen. Erstaunlicherweise ändert sich der anamorphotische Faktor bei der Fokussierung in vergleichsweise geringem Ausmaß. Je nach Ausbildung des Vorsatzes, Aufwand und Einsatzzweck liegt die prozentuale Änderung des anamorphotischen Faktors in der Größenordnung von einigen 10tel % bis hin zu etwa 1 % bei einem mittleren anamorphotischen Faktor in der Größenordnung von 4:3 und bis zu etwa 4 % bei einem anamorphotischen Faktor von etwa 2:1. Ein weiterer Vorteil des neuen Vorsatzes besteht darin, daß bei Verwendung eines hinsichtlich der Bildfehler korrigierten Vorsatzes die Bildfehler des Grundobjektivs durch den Vorsatz nicht wesentlich vergrößert werden, d. h. ein solcher korrigierter Vorsatz kann auch bei Grundobjektiven mit höchstem Auflösungsvermögen angewendet werden, ohne daß eine bemerkbare Veränderung des Gesamtauflösungsvermögens stattfindet. Bei der zweiten Möglichkeit nach der Erfindung wird die Reihenfolge zwischen den beiden Linsengruppen mit streuender Wirkung umgekehrt. Damit ergibt sich die Möglichkeit, die Linsen in den beiden Linsengruppen zusammenzufassen und so die Anzahl der Linsen zu verkleinern. Es können Zylinderlinsen mit sich kreuzenden Achsen eingesetzt werden. Es ist auch möglich, Linsen mit zylindrischer oder sphärischer Oberfläche zu benutzen. Durch die Vertauschung der hinteren Linsengruppe des ersten Teilsystems mit der vorderen Linsengruppe des zweiten Teilsystems wird jedoch die gemeinsame Grundanordnung: Positive Linsengruppe, negative Linsengruppe, negative Linsengruppe, positive Linsengruppe nicht verlassen.

Zur Einstellung auf verschiedene Objektabstände (Fokussierung) kann die vordere Linsengruppe des zweiten Teilsystems und/oder die hintere Linsengruppe des ersten Teilsystems verschiebbar sein, wobei dann auch die hintere Linsengruppe des zweiten Teilsystems und das Grundobjektiv gemeinsam nachführbar sind. Dabei wird die Entfernung zwischen der ersten Oberfläche des ersten Teilsystems und der Bildebene des Grundobjektivs konstantgehalten. Dabei ändert sich also der Abstand zwischen Vorsatz und Grundobjektiv nicht. Ändert sich dagegen der Abstand zwischen Vorsatz und Grundobjektiv, dann ergibt sich auch eine andere Entfernung zwischen der ersten Oberfläche des ersten Teilsystems und der Bildebene des Grundobjektivs. Eine solche Fokussierung hat den Vorteil, daß der anamorphotische Faktor über den Anwendungsbereich bei der Fokussierung ungefähr konstant bleibt.

Wenn sämtliche für den Vorsatz verwendeten Linsen nur solche Brechungsindizes aufweisen, die sich voneinander um nicht mehr als 5 % unterscheiden, dann ergibt dies eine besonders gute Bildqualität.

Zur Korrektur der Bildfehler ergibt sich die Möglichkeit, daß die vordere Linsengruppe und/oder die hintere Linsengruppe des zweiten und/oder des ersten Teilsystems mindestens zwei Linsen mit verschiedenen Abbezahlen aufweisen. Damit ist die Möglichkeit gegeben, durch Verwendung von nur vier Linsen in jedem Teilsystem bei Aufteilung von zwei Linsen für die vordere Linsengruppe und zwei Linsen für die hintere Linsengruppe eine sehr gute Farbkorrektur zu erreichen. In jedem Abschnitt werden dabei zwei Glassorten mit im wesentlichen gleichen Brechungszahlen und unterschiedlichen Abbezahlen gezielt eingesetzt.

Es besteht die Möglichkeit, daß die am Vorsatz eingesetzten Linsen insgesamt so aufeinander abgestimmt sind, daß der vorgeschriebene anamorphotische Faktor (Nennwert) zwischen Unendlich und dem minimalen Objektabstand genau erreicht wird. Der vorgeschriebene anamorphotische Faktor wird also nicht mehr bei Unendlich erreicht, sondern in einer Zwischenposition bei der Fokussierung. Damit ist es möglich, die prozentuale Abweichung des anamorphotischen Faktors zu minimalisieren. Wenn die beiden einander zugekehrten Linsengruppen mit zerstreuender Wirkung in ihrer Reihenfolge vertauscht angeordnet werden, besteht die Möglichkeit, mindestens eine Linsegruppe mit der angrenzenden Linsengruppe mit sammelnder Wirkung zu einer Linsengruppe zusammenzufassen. Dadurch wird die Anzahl der Linsen am Vorsatz verkleinert.

Die Erfindung wird in ihrer prinzipiellen Ausbildung sowie anhand von bevorzugten Ausführungsbeispielen in den Zeichnungen weiter beschrieben. Es zeigen:

Figur 1a   die erste prinzipielle Ausbildung und Anordnung der Teilsysteme an dem Vorsatz in Verbindung mit dem Grundobjektiv,

Figur 1b   die zweite Anordnungsmöglichkeit nach der Erfindung,

Figur 2   die Bildfehlerkurven des Vorsatzes eines Ausführungsbeispiels 1, welches auch in Figur 1a dargestellt ist,

Figur 3   die Anordnung und Ausbildung der Linsen des Vorsatzes an einem Ausführungsbeispiel 2,

Figur 4   die zu dem Ausführungsbeispiel 2 gehörigen Bildfehlerkurven und

Figur 5   die zu einem Ausführungsbeispiel 3 gehörigen Bildfehlerkurven.

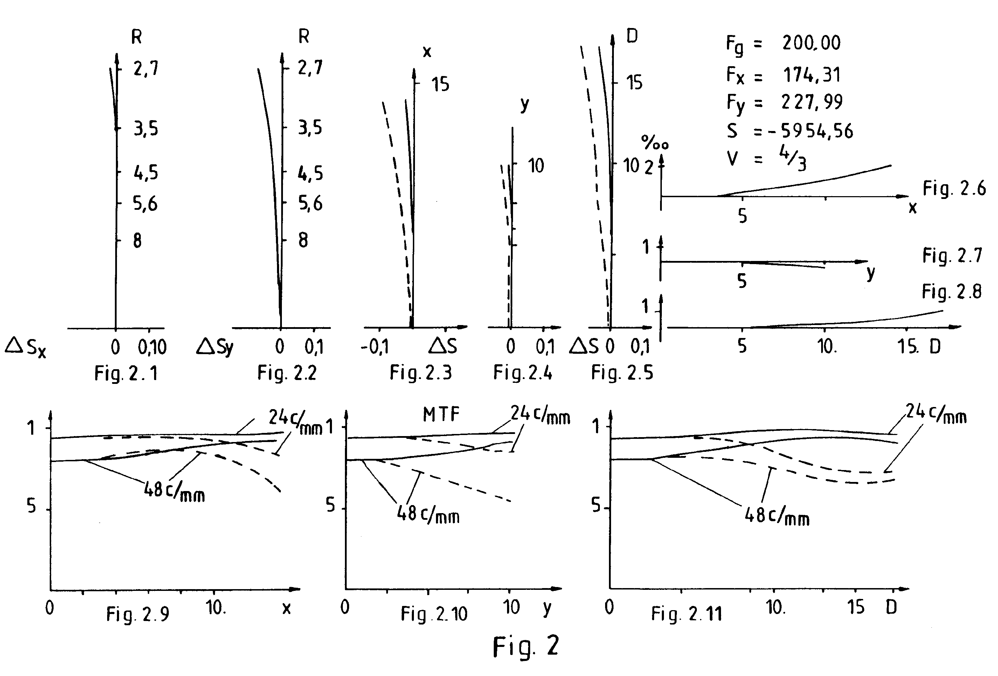

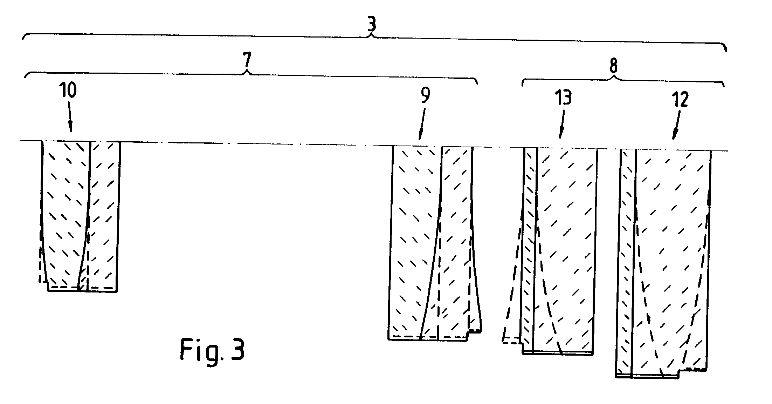

In Figur 1a ist die einfachste Ausführungsmöglichkeit des Vorsatzes verdeutlicht, an der zugleich die prinzipielle Anordnung und Ausbildung erkennbar ist. In Figur 1a ist die optische Achse 1 für ein Grundobjektiv 2 und einen Vorsatz 3 dargestellt. Auf der dem Grundobjektiv 2 abgekehrten Seite des Vorsatzes 3 ist eine Objektebene 4 senkrecht zu der optischen Achse 1 angedeutet, wie sie bei der Aufnahme oder als Leinwand bei der Wiedergabe Verwendung findet. Auf der anderen Seite ist eine Bildebene 5 angeordnet, in der bei Aufnahme und Wiedergabe der Film zu liegen kommt. Die Entfernung 6 zwischen der Eintrittsoberfläche des Vorsatzes 3 und der Bildebene 5 möge fest vorgegeben sein. Der Vorsatz 3 weist einn zweites Teilsystem 7 und ein erstes Teilsystem 8 auf, wie sie an sich aus dem Stand der Technik (Figuren 1 und 2 der US-PS 3 041 935) bekannt sind. Die zweite Teilsystem 7 ist für die Vergrößerung in der einen Richtung, beispielsweise in der x-Richtung, ausgebildet und vorgesehen und besteht aus einer vorderen Linsengruppe 9 im einfachsten Fall aus einer Linse, die negativ ist, also zerstreuende Wirkung hat, und einer hinteren Linsengruppe 10 im einfachsten Fall aus einer Linse, die positiv ist, also sammelnde Wirkung hat. In Weiterbildung, wie dies anhand von Figur 3 dann erläutert wird, kann die vordere Linsengruppe 9 aus mehreren Linsen - insgesamt im wesentlichen negativ - und aus einer hinteren Linsengruppe 10 aus mehreren Linsen - insgesamt im wesentlichen positiv - ausgebildet sein. Zwischen vorderer Linsengruppe 9 und hinterer Linsengruppe 10 ist ein von Null verschiedener Luftabstand 11 vorgesehen. Nur das zweite Teilsystem 7, nicht aber das erste Teilsystem 8, erbringt eine Vergrößerung in dieser betrachteten und dargestellten x-Richtung, weshalb eine auch im Bereich des ersten Teilsystems 8 gebildete vordere Linsengruppe 12 und eine hintere Linsengruppe 13 in der gemeinsamen Darstellungsebene der Figur 1a (x-Richtung) als durch ebene Flächen begrenzte Linsen dargestellt sind. Tatsächlich kann auch hier die vordere Linsengruppe 12 im einfachsten Fall aus einer einzigen Linse, in Weiterbildung aus mehreren Linsen, bestehen. Ebenso besteht die hintere Linsengruppe 13 des ersten Teilsystems 8 im einfachsten Fall aus einer Linse, in Weiterbildung aus mehreren Linsen. Die Linse bzw. die Linsen der vorderen Linsengruppe 12 und der hinteren Linsengruppe 13 des ersten Teilsystems 8 entfalten in x-Richtung keine Wirkung. In y-Richtung ist die Linse bzw. die Linsen der vorderen Linsengruppe 12 positiv und die Linse bzw. die Linsen der hinteren Linsengruppe 13 negativ. Auch hier finden also Zylinderlinsen Anwendung.   Zwischen der vorderen Linsengruppe 12 und der hinteren Linsengruppe 13 des ersten Teilsystems 8 ist ein Luftabstand 14 vorgesehen, der ebenso von Null verschieden ist.

Zur Fokussierung wird die hintere Linsengruppe 13 des ersten Teilsystem 8 und die vordere Linsengruppe 9 des zweiten Teilsystems 7 gemeinsam gemäß Pfeil 15 relativ zu der vorderen Linsengruppe 12 des ersten Teilsystems 8 verschoben, wobei die hintere Linsengruppe 10 des zweiten Teilsystems 7 gemeinsam mit dem Grundobjektiv 2 gemäß Pfeil 16 nachgeführt werden. Die Fokussierung kann natürlich auch umgekehrt erfolgen. Es kommt nur auf die Relativbewegung an.

Bemerkenswert für die prinzipielle Anordnung der beiden Teilsysteme 7 und 8 ist es, daß diese Teilsysteme 7 und 8 nicht, wie im Stand der Technik geschehen, ineinandergeschachtelt werden, sondern daß das zweite Teilsystem 7 für sich und auch das erste Teilsystem 8 für sich geschlossen und getrennt nebeneinander angeordnet werden, wobei die Anordnung so gewählt sein muß, daß das Teilsystem 7 vollständig zwischen dem Teilsystem 8 und dem Grundobjektiv 2 angeordnet ist, nicht etwa umgekehrt.

Die zweite prinzipielle Anordnungsmöglichkeit ist in Figur 1b dargestellt. Sie unterscheidet sich von der in Figur 1a dargestellten Möglichkeit nur dadurch, daß die hintere Linsengruppe 13 des ersten Teilsystems 8 und die vordere Linsengruppe 9 des zweiten Teilsystems 7 gegeneinander vertauscht angeordnet sind. In beiden Fällen (Figur 1a, Figur 1b) bleibt jedoch die grundsätzliche Reihenfolge am Vorsatz 3: positive Linsengruppe, negative Linsengruppe, negative Linsengruppe, positive Linsengruppe, erhalten. Damit ergibt sich die Möglichkeit, die Anzahl der Linsen zu verkleinern. Es können auch Linsengruppen 10 und 13 und/oder Linsengruppen 9 und 12 zu je einer Linse zusammengefaßt werden.

Ausführungsbeispiel 1

Dieses einfachste Ausführungsbeispiel 1 ist so aufgebaut, daß der Vorsatz 3 insgesamt nur aus vier Linsen besteht, wie sie in Figur 1a in ihrer prinzipiellen Anordnung und körperlichen Ausbildung verdeutlicht sind. Ein solcher Vorsatz 3 ist geeignet für Fernsehprojektionssysteme, bei denen für die drei Grundfarben Rot, Blau und Grün je eine Bildröhre vorgesehen ist. Für jede Grundfarbe ist ein Grundobjektiv 2 und ein zugehöriger Vorsatz 3 vorgesehen. Eine Farbkorrektur ist deshalb nicht erforderlich; hieraus erklärt sich, daß insgesamt nur vier Linsen für jeden Vorsatz 3 genügen. Für jeden Vorsatz werden dieselben vier Linsen eingesetzt, wobei lediglich, abhängig von der jeweiligen Farbe, die vier Linsen optimal einjustiert werden. Die nachfolgenden Zahlenangaben für das erste und jedes folgende Ausführungsbeispiel sind grundsätzlich in der Dimension mm angegeben.

```
Brennweite des Grundobjektivs                  Fg = 200.00
Brennweite des Grundobjektivs
und des Vorsatzes (Gesamtsystem)
in erster Richtung (horizontal)                Fx = 171,31
Brennweite des Grundobjektivs
und des Vorsatzes (Gesamtsystem)
in der zweiten Richtung (vertikal)             Fy = 227,99
Anzahl der Glasoberflächen
(Vorsatz + Grundobjektiv)                      : 10
Anzahl der Farben                              : 4
```

Der Vorsatz möge die Glasoberflächen 1 bis 8 aufweisen, während die Glasoberflächen 9 und 10 diejenigen des Grundobjektivs 2 sind, wobei das Grundobjektiv 2 als ideales Objektiv, also bildfehlerfrei, in die Rechnung bei der Auslegung des Vorsatzes eingesetzt wurde.

Die Rechnung erfolgte mit den folgenden vier Farben in den angegebenen vier Wellenlängen Grün, Rot, Blau und Grün:

```
1                                    587.5618
2                                    656.2725
3                                    486.1327
4                                    587.5618
```

In der nachfolgenden Tabelle sind Zylinderflächen CS und kugelige Flächen RS in der Form unterschieden. In der zweiten Spalte sind die Radien, in der dritten Spalte die Abstände und in der vierten Spalte die zugehörigen Glassorten, wobei ein Strich einen Luftspalt symbolisiert. In den drei letzten Spalten sind dann die Brechungsindizes der Farben 1, 2 und 3 angegeben:

| I | Form | Radien | Abstände | Glas | Brechungsindizes | | |
|---|---|---|---|---|---|---|---|
| 0 | | | | | 1.00000 | 1.00000 | 1.00000 |
| 1 | CS | 630.493 | 28.025 | LaK 8 | 1.71300 | 1.70897 | 1.72222 |
| 2 | RS | Unendlich | 102.508 | – | 1.00000 | 1.00000 | 1.00000 |
| 3 | RS | -6370.000 | 29.109 | LaK 8 | 1.71300 | 1.70897 | 1.72222 |
| 4 | CS | 600.068 | 5.470 | – | 1.00000 | 1.00000 | 1.00000 |
| 5 | CS | -461.851 | 33.280 | Lak 8 | 1.71300 | 1.70897 | 1.72222 |
| 6 | RS | Unendlich | 29.649 | – | 1.00000 | 1.00000 | 1.00000 |
| 7 | RS | Unendlich | 41.102 | Lak 8 | 1.71300 | 1.70897 | 1.72222 |
| 8 | CS | -454.799 | 840.000 | – | 1.00000 | 1.00000 | 1.00000 |
| 9 | RS | 103.360 | 10.000 | BK 7 | 1.51432 | 1.51432 | 1.52238 |
| 10 | RS | Unendlich | 0.000 | – | 1.00000 | 1.00000 | 1.00000 |

In der nächsten Tabelle sind für die Übertrittsflächen die Anordnung der Zylinderachsen bzw. der Kugelachsen verdeutlicht. Aus den ersten beiden Spalten ist erkennbar, daß die Mittelpunkte der Kugeln auf der optischen Achse liegen. Die dritte Spalte gibt an, daß die Anordnung der Zylinderachsen senkrecht und gerade zur optischen Achse erfolgen muß. In der vierten Spalte bedeutet eine Null die horizontale Richtung und eine 90 die vertikale Richtung. In der fünften Spalte sind die Durchmesser der einzelnen Linsen angegeben. Die beiden letzten Spalten enthalten die maximalen Abmessungen der Zylinderlinsen in horizontaler Richtung x und in vertikaler Richtung y.

| | | | | | | | |
|---|---|---|---|---|---|---|---|
| 1 | 0.0000 | 0.0000 | 90.0000 | 90.0000 | 126.000 | 126.000 | 89.500 |
| 2 | 0.0000 | 0.0000 | | | 2280.220 | 2280.220 | 2280.220 |
| 3 | 0.0000 | 0.0000 | | | 248.258 | 248.258 | 248.258 |
| 4 | 0.0000 | 0.0000 | 90.0000 | 90.0000 | 215.071 | 161.659 | 141.852 |
| 5 | 0.0000 | 0.0000 | 90.0000 | 0.0000 | 215.071 | 161.659 | 141.852 |
| 6 | 0.0000 | 0.0000 | | | 2000.000 | 2000.000 | 2000.000 |
| 7 | 0.0000 | 0.0000 | | | 2000.000 | 2000.000 | 2000.000 |

| | | | | | | | |
|---|---|---|---|---|---|---|---|
| 8 | 0.0000 | 0.0000 | 90.0000 | 0.0000 | 2014.110 | 2000.000 | 237.988 |
| 9 | 0.0000 | 0.0000 | | | 88.706 | 88.706 | 88.706 |
| 10 | 0.0000 | 0.0000 | | | 88.706 | 88.706 | 88.706 |

Beim Fokussieren ergeben sich folgende Verhältnisse:

Die Entfernung zwischen der Eintrittsoberfläche an der vordereren Linsengruppe 12 des ersten Teilsystems und der Bildebene 5 beträgt 1316.382 und ist konstant.

In der vorliegenden Tabelle, die für Fokussierung gilt, ist für die verschiedenen Entfernungen die Veränderung der Luftabstände 14 (E(2)) und 11 (E(5)) in den nachfolgenden Spalten sowie die prozentuale Änderung des anamorphotischen Faktors angegeben:

1 Fuß = 30,98 cm.

| Entfernung | | E (2) | E (5) | d (Fy/Fx) |
|---|---|---|---|---|
| m | Fuß | mm | mm | % |
| Infinit | . | 9.100 | 129.061 | −0,18 |
| 100.00 | | 10.293 | 127.499 | −0.17 |
| | 260.00 | 10.606 | 127.089 | −0.16 |
| 65.00 | | 10.937 | 126.657 | −0,16 |
| | 130.00 | 12.120 | 125.116 | −0.14 |
| 35.00 | | 12.522 | 124.596 | −0.13 |
| | 100.00 | 13.033 | 123.930 | −0,12 |
| 25.00 | | 13.902 | 122.805 | −0.11 |
| | 75.00 | 14.355 | 122.217 | −0.11 |
| 20.00 | | 15.115 | 121.234 | −0.09 |
| | 60.00 | 15.685 | 120.498 | −0.09 |
| 17.00 | | 16.190 | 119.847 | −0.08 |
| | 50.00 | 17.019 | 118.777 | −0.07 |
| 15.00 | | 17.149 | 118.613 | −0.06 |
| | 45.00 | 17.913 | 117.630 | −0.05 |
| 12.50 | | 18.784 | 116.512 | −0.04 |
| | 40.00 | 19.033 | 116.193 | −0.04 |

| Entfernung | | E(2) | E(5) | d(Fy/Fx) |
|---|---|---|---|---|
| m | Fuß | mm | mm | % |
| 11.00 | | 20.129 | 114.788 | -0.02 |
| | 35.00 | 20.479 | 114.342 | -0.02 |
| 9.50 | | 21.909 | 112.519 | 0.00 |
| | 30.00 | 22.419 | 111.869 | 0.01 |
| 8.50 | | 23.453 | 110.555 | 0.02 |
| | 25.00 | 25.154 | 108.398 | 0.04 |
| 7.50 | | 25.417 | 108.065 | 0.04 |
| | 23.00 | 26.590 | 106.583 | 0.06 |
| 7.00 | | 26.617 | 106.549 | 0.06 |
| | 22.00 | 27.409 | 105.549 | 0.07 |
| 6.50 | | 28.006 | 104.797 | 0.07 |
| | 21.00 | 28.308 | 104.416 | 0.08 |
| 6.00 | | 29.635 | 102.751 | 0.09 |
| | 19.00 | 30.401 | 101.790 | 0,10 |
| 5.50 | | 31.570 | 100.324 | 0.11 |
| | 18.00 | 31.627 | 100.252 | 0.12 |
| 5.00 | | 33.906 | 97.407 | 0.14 |
| | 16.50 | 33.756 | 97.594 | 0.14 |
| 4.80 | | 34.982 | 96.067 | 0.15 |
| | 15.50 | 35.413 | 95.531 | 0.15 |
| 4.60 | | 36.156 | 94.609 | 0.16 |
| | 15.00 | 36.328 | 94.395 | 0.16 |
| 4.50 | | 36.783 | 93.830 | 0.17 |

Hieraus wird erkennbar, daß der genaue anamorphotische Faktor bei einer Entfernung von 9,5 m erreicht wird, und daß die prozentuale Änderung des anamorphotischen Faktors zwischen 4,5 m und Unendlich, zwischen +0,17 und -0,18 % abweicht. Dies ist eine sehr geringe Abweichung und damit ein hervorragender Wert.

In Figur 2 sind anhand der verschiedenen Einzeldarstellungen die Bildfehlerkurven des Vorsatzes gemäß dem Ausführungsbeispiel 1 in Verbindung mit einem idealen (fehlerfreien) Objektiv 2 dargestellt. Figur 2.1 zeigt den Öffnungsfehler $\Delta S_x$ des Vorsatzes in horizontaler Richtung bei als fehlerfrei vorausgesetztem Grundobjektiv 2. Figur 2.2 zeigt den Öffnungsfehler $\Delta S_y$ des Vorsatzes in vertikaler Richtung abhängig von der Blendenzahl R. Figur 2.3 verdeutlicht die Bildfeldwölbung $\Delta S$ in horizontaler Richtung, während Figur 2.4 der vertikalen und Figur 2.5 der diagonalen Richtung zugeordnet ist, wobei x der horizontalen, y der vertikal und D der diagonalen Abmessungen des halben Bildes entsprechen. Die durchgezogenen Kurven zeigen die meridionalen und die gestrichelten Kurven die sagittalen Bildfeldwölbungen. Die Figuren 2.6, 2.7 und 2.8 zeigen die Verzeichnung; und zwar in horizontaler, in vertikaler und diagonaler Richtung. Figuren 2.9 und 2.11 lassen schließlich die Übertragungsfunktion des Vorsatzes und des Grundobjektives erkennen. Auf den horizontalen Achsen sind die Bildabmessungen in Richtung x, y und D aufgetragen. Die Kurven zeigen die Übertragungsfunktionen eines Objekts mit einer sinusförmigen Intensitätsverteilung, für 24 oder 48 Zyklen/mm in der Bildebene. Die ausgezogenen Kurven entsprechen dem Zustand, wenn die Maxima und die Minima parallel zur Vertikalachse sind. Die gestrichelten Kurven zeigen Entsprechendes parallel zur Horizontalachse.

In Figur 3 ist ein zweites Ausführungsbeispiel dargestellt, und zwar in der Anordnung, wie sie prinzipiell aus Figur 1a bereits bekannt ist. Es ist hier nur die Ausbildung des Vorsatzes 3 verdeutlicht. Das zweite Teilsystem 7 besteht auch hier aus einer vorderen Linsengruppe 9 und einer hinteren Linsengruppe 10. Die vordere Linsengruppe 9 besteht aus zwei zusammengekitteten Linsen, deren streuende Wirkung sich im wesentlichen auf die horizontale Richtung erstreckt. Wie aus der nachfolgenden Rechnung des Ausführungsbeispiels 2 erkennbar wird, ist auch eine sehr geringe Wirkung in vertikaler Richtung vorhanden. Auch die hintere Linsengruppe des zweiten Teilsystems 7 besteht aus zwei Linsen, die in horizontaler Richtung eine Sammelwirkung (positiv) ausüben. Links von der hinteren Linsengruppe 10 befindet sich auch hier das Grundobjektiv 2 (nicht dargestellt). Auch die vordere Linsengruppe 12 des ersten Teilsystems 8 besteht ebenso wie die hintere Linsengruppe 13 des ersten Teilsystems 8 aus zwei Linsen, die in vertikaler Richtung wirken. Dabei haben die beiden Linsen der vorderen Linsengruppe 12 eine positive, also sammelnde Wirkung und die beiden Linsen der hinteren Linsengruppe 13 eine zerstreuende, also negative Wirkung. In der Figur 3 ist die Ausbildung der acht Linsen in horizontaler Richtung durch ausgezogene Linienführung und in vertikaler Richtung durch gestrichelte Linienführung verdeutlicht.

Nachfolgend wird das in Figur 3 dargestellte Ausführungsbeispiel 2 anhand der nachfolgenden Tabellen verdeutlicht, die analog dem Ausführungsbeispiel 1 zu verstehen sind. Das Ausführungsbeispiel 2 ist geeignet für ein Fernsehprojektionssystem, wobei für die drei Grundfarben nur eine farbige Bildröhre vorgesehen ist. Demzufolge ist hier eine Farbkorrektur erforderlich. Die vordere Linsengruppe und die hintere Linsengruppe der beiden Teilsystems besteht hier jeweils aus zwei Linsen, so daß an diesem Vorsatz 3 insgesamt acht Linsen (komplette Farbkorrektur) eingesetzt werden. Es werden ähnlich gute Abbildungsqualitäten erreicht wie bei dem Ausführungsbeispiel 1.

Für das Ausführungsbeispiel 2 gilt

$Fg = 123.27$
$Fx = 104.11$
$Fy = 137.38$.

| Anzahl der Glasoberflächen | : 14 |
|---|---|
| Anzahl der Farben | : 4 |

| | |
|---|---|
| 1 | 546.0740 |
| 2 | 643.8469 |
| 3 | 479.9914 |
| 4 | 546.0740 |

| I | Form | Radien | Abstände | Glassorte | Brechungsindizes | | |
|---|------|--------|----------|-----------|---------|---------|---------|
| 0 | | | | | 1.00000 | 1.00000 | 1.00000 |
| 1 | CS | 299.799 | 21.906 | LaK 8 | 1.71616 | 1.70962 | 1.72298 |
| 2 | CS | -253.935 | 4.529 | SF 1 | 1.72311 | 1.71141 | 1.73610 |
| 3 | RS | Unendlich | 18.071 | - | 1.00000 | 1.00000 | 1.00000 |
| 4 | RS | Unendlich | 17.556 | SF 1 | 1.72311 | 1.71141 | 1.73610 |
| 5 | CS | -243.608 | 3.608 | LaK 8 | 1.71616 | 1.70962 | 1.72298 |
| 6 | CS | 297.511 | 14.977 | - | 1.00000 | 1.00000 | 1.00000 |
| 7 | CS | -477.500 | 9.085 | LaK 8 | 1.71962 | 1.70962 | 1.72298 |
| 8 | CS | 331.901 | 14.086 | SF 1 | 1.72311 | 1.71141 | 1.73610 |
| 9 | RS | 5088.330 | 82.735 | - | 1.00000 | 1.00000 | 1.00000 |
| 10 | RS | Unendlich | 8.517 | SF 1 | 1.72311 | 1.71141 | 1.73610 |
| 11 | CS | 408.120 | 13.791 | LaK 8 | 1.71616 | 1.70962 | 1.72298 |
| 12 | CS | -502.661 | 348.500 | - | 1.00000 | 1.00000 | 1.00000 |

| | | | | | | | | |
|---|---|---|---|---|---|---|---|---|
| 1 | 0.000 | 0.000 | 90.000 | 0.000 | 129.000 | 0.000 | 106.000 | 100.000 |
| 2 | 0.000 | 0.000 | 90.000 | 0.000 | 2005.910 | 0.000 | 2000.000 | 153.868 |
| 3 | 0.000 | 0.000 | | | 2064.001 | 0.000 | 2000.000 | 510.000 |
| 4 | 0.000 | 0.000 | | | 2000.000 | 0.000 | 2000.000 | 2000.000 |
| 5 | 0.000 | 0.000 | 90.000 | 0.000 | 2008.288 | 0.000 | 2000.000 | 182.262 |
| 6 | 0.000 | 0.000 | 90.000 | 0.000 | 450.289 | 0.000 | 238.039 | 382.227 |
| 7 | 0.000 | 0.000 | 90.000 | 90.000 | 305.266 | 0.000 | 238.039 | 191.114 |
| 8 | 0.000 | 0.000 | 90.000 | 90.000 | 9999.990 | 0.000 | 394.563 | 9999.990 |
| 9 | 0.000 | 0.000 | | | 197.282 | 0.000 | 197.282 | 197.282 |
| 10 | 0.000 | 0.000 | 90.000 | 90.000 | 2648.601 | 0.000 | 1872.844 | 1872.844 |
| 11 | 0.000 | 0.000 | 90.000 | 90.000 | 1077.572 | 0.000 | 761.959 | 761.959 |
| 12 | 0.000 | 0.000 | 90.000 | 90.000 | 81.800 | 0.000 | 81.800 | 81.800 |
| 13 | 0.000 | 0.000 | | | 68.667 | 0.000 | 68.667 | 68,667 |
| 14 | 0.000 | 0.000 | | | 68.667 | 0.000 | 68.667 | 68.667 |

Die Nullen in der drittletzten Spalte bedeuten, daß keine Mittenabschattung vorliegt.

Beim Fokussieren ergeben sich folgende Verhältnisse:

Die Entfernung zwischen der Eintrittsoberfläche an der vorderen Linsengruppe 12 des ersten Teilsystems und der Bildebene 5 beträgt 685.930 und ist konstant.

In der vorliegenden Tabelle, die für Fokussierung gilt, ist für die verschiedenen Entfernungen die Veränderung der Luftabstände 14 (E(3)) und 11 (E(9)) in den nachfolgenden Spalten sowie die prozentuale Änderung des anamorphotischen Faktors angegeben:

| Entfernung | | E(3) | E(9) | d(Fy/Fx) |
|---|---|---|---|---|
| | Fuß | mm | mm | % |
| Unendlich | | 6.500 | 96.719 | -1.03 |
| | 200.00 | 7.493 | 95.565 | -0.95 |
| | 100.00 | 8.444 | 94.405 | -0.87 |
| | 75.00 | 9.083 | 93.627 | -0.81 |
| | 50.00 | 10.369 | 92.062 | -0.70 |
| | 30.00 | 12.984 | 88.897 | -0.49 |
| | 25.00 | 14.312 | 87.295 | -0.38 |
| | 20.00 | 16.330 | 84.868 | -0.22 |
| | 18.00 | 17.466 | 83.506 | -0.13 |
| | 17.00 | 18.138 | 82.701 | -0.08 |
| | 16.00 | 18.898 | 81.793 | -0.02 |
| | 15.00 | 19.766 | 80.757 | 0.05 |
| | 14.00 | 20.763 | 79.567 | 0.12 |
| | 13.00 | 21.924 | 78.185 | 0.21 |
| | 12.00 | 23.290 | 76.562 | 0.31 |
| | 11.60 | 23.907 | 75.828 | 0.35 |
| | 11.00 | 24.922 | 74.626 | 0.43 |
| | 10.60 | 25.668 | 73.744 | 0.48 |
| | 10.00 | 26.907 | 72.279 | 0.57 |

| Entfernung | | E(3) | E(9) | d (Fy/Fx) |
|---|---|---|---|---|
| | Fuß | mm | mm | % |
| | 9.60 | 27.824 | 71.196 | 0.63 |
| | 9.00 | 29.368 | 69.379 | 0.74 |
| | 8.50 | 30.835 | 67.653 | 0.84 |
| | 8.00 | 32.503 | 65.695 | 0.95 |
| | 7.70 | 33.618 | 64.389 | 1.02 |

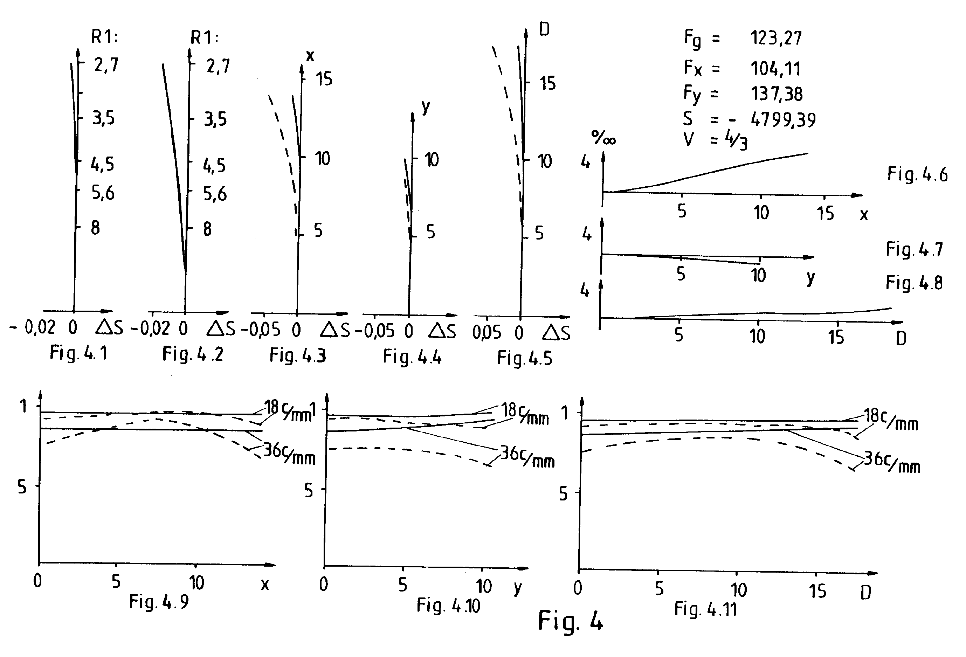

Die zugehörigen Bildfehlerkurven zu dem Ausführungsbeispiel 2 sind aus den einzelnen Darstellungen der Figur 4 entnehmbar, wobei die einzelnen Diagramme in der gleichen Reihenfolge zu verstehen sind, wie dies anhand von Figur 2 bereits erläutert wurde. Über die Qualität des Vorsatzes geben die folgenden Daten Auskunft: z. B. bei 5 m Entfernung von der ersten Oberfläche ist die maximale Farbabweichung (440 und 660 nm) kleiner als 20 mm in beiden Richtungen. Der Spotdurchmesser auf diese Entfernung für alle Farben ist kleiner als 0,5 mm, wenn das Bild ein Achsenbild ist. Die Entfernung eines Punkts mit den Koordinaten 680 mm in x-Richtung und 380 mm in y-Richtung von der optischen Achse ist kleiner als 0,7 mm.

Ausführungsbeispiel 3

Dieses Ausführungsbeispiel ist besonders geeignet für Aufnahmezwecke für professionelle Filmaufnahmen mit großer Lichtstärke.

Es gelten hier die folgenden Daten:

$Fg = 100.00$
$Fx = 62.71$
$Fy = 131.00$

```
Anzahl der  Glasoberflächen              :14
Anzahl der Farben                        : 4
```

| I | Form | Radien | Abstände | Glassorte | Berechnungsindizes | | |
|---|------|--------|----------|-----------|--------|--------|--------|
| 0 | | | | | 1.00000 | 1.00000 | 1.00000 |
| 1 | CS | 394.285 | 15.291 | LaF N21 | 1.78831 | 1.78332 | 1.79992 |
| 2 | CS | -331.901 | 6.116 | SF 11 | 1.78472 | 1.77599 | 1.80645 |
| 3 | CS | Unendlich | 100.224 | – | 1.00000 | 1.00000 | 1.00000 |
| 4 | CS | Unendlich | 10.920 | SF 11 | 1.78472 | 1.77599 | 1.80645 |
| 5 | CS | -257.733 | 4.160 | LaF N21 | 1.78831 | 1.78332 | 1.79992 |
| 6 | CS | 313.350 | 4.600 | – | 1.00000 | 1.00000 | 1.00000 |
| 7 | CS | -140.753 | 3.255 | LaF N21 | 1.78831 | 1.78332 | 1.79992 |
| 8 | CS | 60.706 | 10.500 | SF 11 | 1.78472 | 1.77599 | 1.80645 |
| 9 | CS | 285.948 | 51.328 | – | 1.00000 | 1.00000 | 1.00000 |
| 10 | CS | Unendlich | 3.255 | SF 11 | 1.78472 | 1.77599 | 1.80645 |
| 11 | CS | 107.283 | 7.440 | LaF N 21 | 1.78831 | 1.78332 | 1.79992 |
| 12 | CS | -145.001 | 49.800 | – | 1.00000 | 1.00000 | 1.00000 |
| 13 | RS | 51.680 | 18.900 | BK 7 | 1.51680 | 1.51432 | 1.52238 |
| 14 | RS | Unendlich | 0.000 | – | 1.00000 | 1.00000 | 1.00000 |

| | | | | | | | |
|---|---|---|---|---|---|---|---|
| 1 | 0.000 | 0.000 | 90.000 | 0.000 | 118.072 | 86.454 | 97.763 |
| 2 | 0.000 | 0.000 | 90.000 | 0.000 | 115.653 | 83.783 | 96.174 |
| 3 | 0.000 | 0.000 | 90.000 | 0.000 | 113.296 | 82.509 | 94.397 |
| 4 | 0.000 | 0.000 | 90.000 | 0.000 | 67.758 | 49.482 | 61.433 |
| 5 | 0.000 | 0.000 | 90.000 | 0.000 | 65.383 | 47.474 | 59.748 |
| 6 | 0.000 | 0.000 | 90.000 | 0.000 | 63.695 | 46.709 | 58.429 |
| 7 | 0.000 | 0.000 | 90.000 | 90.000 | 62.881 | 45.801 | 57.858 |
| 8 | 0.000 | 0.000 | 90.000 | 90.000 | 62.097 | 45.478 | 57.530 |
| 9 | 0.000 | 0.000 | 90.000 | 90.000 | 60.977 | 45.223 | 56.482 |
| 10 | 0.000 | 0.000 | 90.000 | 90.000 | 52.280 | 48.365 | 47.365 |
| 11 | 0.000 | 0.000 | 90.000 | 90.000 | 52.071 | 48.580 | 47.029 |
| 12 | 0.000 | 0.000 | 90.000 | 90.000 | 51.937 | 48.667 | 46.326 |
| 13 | 0.000 | 0.000 | | | 79.907 | 79.907 | 79.907 |
| 14 | 0.000 | 0.000 | | | 79.907 | 79.907 | 79.907 |

Beim Fokussieren ergeben sich folgende Verhältnisse:

Die Entfernung zwischen der Eintrittsoberfläche an der vorderen Linsengruppe 12 des ersten Teilsystems und der Bildebene 5 beträgt 375.012 und ist konstant.

In der vorliegenden Tabelle, die für Fokussierung gilt, ist für die verschiedenen Entfernungen die Veränderung der Luftabstände 14 (E(3)) und 11 (E(9)) in den nachfolgenden Spalten sowie die prozentuale Änderung des anamorphotischen Faktors angegeben. Die Entfernungen bei diesem Fall, wie dies bei Aufnahmegeräten üblicherweise angegeben wird, sind von der Filmebene aus angegeben.

13

| Entfernung | E(3) | E(9) | d(Fy/Fx) |
|---|---|---|---|
| m | mm | mm | % |
| Unendlich | 96.425 | 57.780 | 4.45 |
| 50.00 | 96.918 | 56.975 | 3.91 |
| 30.00 | 97.244 | 56.439 | 3.55 |
| 20.00 | 97.648 | 55.771 | 3.10 |
| 15.00 | 98.047 | 55.104 | 2.65 |
| 10.00 | 98.830 | 53.773 | 1.75 |
| 7.50 | 99.593 | 52.449 | 0.84 |
| 5.00 | 101.057 | 49.823 | -0.96 |
| 4.00 | 102.095 | 47.876 | -2.31 |
| 3.50 | 102.803 | 46.499 | -3.27 |
| 3.00 | 103.702 | 44.682 | -4.54 |
| 2.50 | 104.868 | 42.179 | -6.32 |

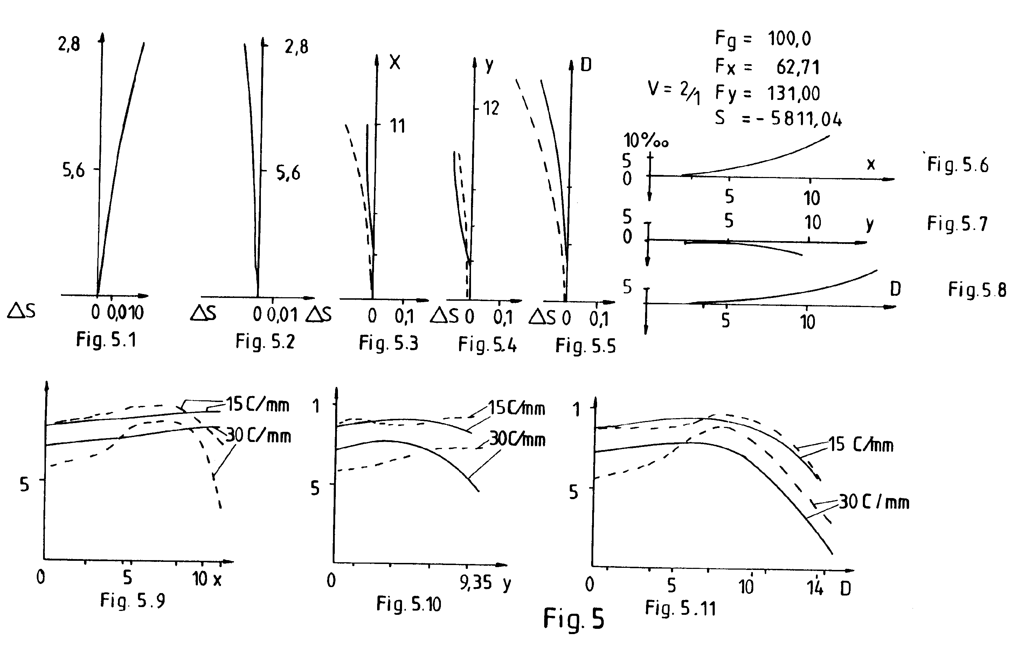

Die zugehörigen Bildfehlerkurven zu dem Vorsatz gemäß dem Ausführungsbeispiel 3 sind aus Figur 5 entnehmbar, wobei auch hier die Einzeldarstellungen so wiedergegeben sind, wie sie anhand der Figuren 2 und 4 für die anderen Ausführungsbeispiele bereits dargestellt und erläutert worden sind.

**Patentansprüche**

1. Anamorphotischer Vorsatz (3) für Aufnahme- oder Wiedergabezwecke zur Verwendung mit einem Grundobjektiv (2), mit einem ersten, im wesentlichen zur Vergrößerung in einer ersten Richtung dienenden Teilsystem (8) und einem zweiten, im wesentlichen zur Vergrößerung in einer zur ersten Richtung senkrecht stehenden Richtung dienenden Teilsystem (7), wobei das erste Teilsystem (8) eine vordere, positive Linsengruppe (12) und eine hintere, negative Linsengruppe (13) und das zweite Teilsystem (7) eine vordere, negative Linsengruppe (9) und eine hintere, positive Linsengruppe (10) enthält, dadurch gekennzeichnet, daß die Teile des Vorsatzes (3) in der folgenden Reihenfolge angeordnet sind:
die positive Linsengruppe (12) des ersten Teilsystems (8);
die negative Linsengruppe (13; 9) des ersten oder zweiten Teilsystems (8; 7);
die negative Linsengruppe (9; 13) des zweiten oder ersten Teilsystems (7; 8);
die positive Linsengruppe (10) des zweiten Teilsystems (1);
und daß sich für ein Grundobjektiv (2) mit Brennweite Fg bei einer Einstellung des Vorsatzes auf den Objektabstand Unendlich eine Gesamtbrennweite $V_1 \cdot Fg$ in der ersten Richtung und eine Gesamtbrennweite $V_2 \cdot Fg$ in der zweiten Richtung ergibt, wobei die Bedingung
$$(V_1/V_2)^2 \cdot 0,85 = V_1 \qquad V_2 = 1,15 \cdot (V_2/V_1)^2$$
eingehalten wird.

2. Vorsatz nach Anspruch 1, dadurch gekennzeichnet, daß zur Einstellung auf verschiedene Objektabstände die vordere Linsengruppe (9) des zweiten Teilsystems (7) und/oder die hintere Linsengruppe (13) des ersten Teilsystems (8) verschiebbar sind, daß auch die hintere Linsengruppe (10) des zweiten Teilsystems (7) und das Grundobjektiv (2) gemeinsam nachführbar sind, so daß dabei die Entfernung zwischen der ersten Oberfläche des ersten Teilsystems (8) und der Bildebene (5) des Grundobjektivs (2) konstantgehalten wird.

3. Vorsatz nach einem oder mehreren der Ansprüche 1 und 2, dadurch gekennzeichnet, daß sämtliche für den Vorsatz verwendeten Linsen nur solche Brechungszahlen aufweisen, die sich voneinander um nicht mehr als 5 % unterscheiden.

14

**4.** Vorsatz nach Anspruch 3, dadurch gekennzeichnet, daß die vordere Linsengruppe (9 bzw. 12) und/oder die hintere Linsengruppe (10 bzw. 13) des zweiten und/oder des ersten Teilsystems (7 bzw. 8) mindestens zwei Linsen mit verschiedenen Abbezahlen aufweisen.

**5.** Vorsatz nach einem oder mehreren der Ansprüche 1 bis 4, dadurch gekennzeichnet, daß die am Vorsatz (3) eingesetzten Linsen insgesamt so aufeinander abgestimmt sind, daß der vorgeschriebene anamorphotische Faktor (Nennwert) zwischen Unendlich und dem minimalen Objektabstand genau erreicht wird.

**6.** Vorsatz nach Anspruch 1 oder 2, dadurch gekennzeichnet, daß die positive Linsengruppe des ersten Teilsystems (8) und die negative Linsengruppe des zweiten Teilsystems (7) nebeneinander angeordnet sind und mindestens eine negative Linse einer der Teilgruppen (9 bzw. 13) mit der angrenzenden positiven Linse der anderen Teilgruppe (12 bzw. 10) zu einer Linsengruppe (9, 12 bzw. 13, 10) zusammengefaßt sind.

## Claims

**1.** An anamorphotic attachment (3) for photography or display purposes to be used with a base lens (2), with a first partial system (8) serving substantially for enlargement in a first direction, and a second partial system (7) serving substantially for enlargement in a direction extending perpendicular to the first direction, wherein the first partial system (8) contains a front positive lens group (12) and a rear negative lens group (13) and the second partial system (7) contains a front negative lens group (9) and a rear positive lens group (10), characterised in that the parts of the attachment (3) are disposed in the following order:
the positive lens group (12) of the first partial system (8); the negative lens group (13; 9) of the first or second partial system (8; 7);
the negative lens group (9; 13) of the second or first partial system (7; 8);
the positive lens group (10) of the second partial system (1);
and that for a base lens (2) with a focal length Fg in the case of an adjustment of the attachment to the object distance infinity a total focal length $V_1 \cdot Fg$ in the first direction and a total focal length $v_2 \cdot F_g$ in the second direction result, wherein the condition
$$(V_1/V_2)^2 \cdot 0.85 = V_1 \qquad V_2 = 1.15 \cdot (V_2/V_1)^2$$
is adhered to.

**2.** An attachment according to claim 1, characterised in that in order to adjust the different object distances, the front lens group (9) of the second partial system (7) and/or the rear lens group (13) of the first partial system (8) are displaceable, that the rear lens group (10) of the second partial system (7) and the base lens (2) can also be tracked together, so that the distance between the first surface of the first partial system (8) and the image plane (5) of the base lens (2) is kept constant.

**3.** An attachment according to one or both of claims 1 and 2, characterised in that all lenses used for the attachment only comprise refractive indices that differ from each other by no more than 5 %.

**4.** An attachment according to claim 3, characterised in that the front lens group (9 or 12) and/or the rear lens group (10) or 13) of the second and/or of the first partial system (7 or 8) comprise at least two lenses with different Abbe indices.

**5.** An attachment according to one or more of claims 1 to 4, characterised in that the lenses used in the attachment (3) are as a whole coordinated with each other in such a way that the prescribed anamorphotic factor (nominal value) is precisely achieved between infinity and the minimum object distance.

**6.** An attachment according to claim 1 or 2, characterised in that the positive lens group of the first partial system (8) and the negative lens group of the second partial system (7) are disposed next to each other and at least one negative lens of one of the partial groups (9 or 13) is combined with the adjacent positive lens of the other partial group (12 or 10) to form another lens group (9, 12 or 13, 10).

## Revendications

**1.** Adaptateur (3) anamorphotique pour prises de vue ou projection, destiné à être utilisé avec un objectif de base (2), comportant un premier système partiel (8) servant essentiellement à l'agrandissement dans une première direction et à un deuxième système partiel (7), servant essentiellement à l'agrandissement dans une direction perpendiculaire à la première, le premier système partiel (8) comportant un groupe de lentilles (12) avant positives, et un groupe de lentilles (13) arrière négatives, et le deuxième système partiel (7) comportant un groupe de lentilles (9) avant négatives et un groupe de lentilles (10) arrière positives, caractérisé en ce que les parties de l'adaptateur (3) sont disposées dans l'ordre suivant :

le groupe de lentilles (12) positives du premier système partiel (8) ;

le groupe de lentilles (13 ; 9) négatives du premier ou du deuxième système partiel (8 ; 7) ;

le groupe de lentilles (9 ; 13) négatives du deuxième ou du premier système partiel (7 ; 8) ;

le groupe de lentilles (10) positives du deuxième système partiel (7) ;

et en ce que pour un objectif de base (2) de distance focale Fg pour un réglage de l'adaptateur sur la distance de l'objet infinie, on obtient une distance focale totale $V_1 \cdot FG$ dans la première direction et une distance focale totale $V_2 \cdot Fg$ dans la deuxième direction, la condition $(V_1/V_2)^2 \cdot 0{,}85 = V_1 \qquad V_2 = 1{,}15 \cdot (V_2/V_1)^2$ étant respectée.

2. Adaptateur selon la revendication 1, caractérisé en ce que pour le réglage sur différentes distances de l'objet, le groupe de lentilles (9) avant du deuxième système partiel (7) et/ou le groupe de lentilles arrière (13) du premier système partiel (8) sont déplaçables, en ce que le groupe de lentilles arrière (10) du deuxième système partiel (7) et l'objectif de base (2) peuvent aussi être déplacés conjointement, ce qui fait que dans ce cas la distance entre la première surface du premier système partiel (8) et le plan d'image (5) de l'objectif de base (2) est maintenue constante.

3. Adaptateur selon une ou plusieurs des revendications 1 et 2, caractérisé en ce que toutes les lentilles utilisées pour l'adaptateur ne présentent que les indices de réfraction qui ne diffèrent pas entre eux de plus de 5 %.

4. Adaptateur selon la revendication 3, caractérisé en ce que le groupe de lentilles avant (9 ou 12) et/ou le groupe de lentilles arrière (10 ou 13) du deuxième et/ou du premier système partiel (7 ou 8) comporte au moins deux lentilles avec des coefficients d'Abbe différents.

5. Adaptateur selon une ou plusieurs des revendications 1 à 4, caractérisé en ce que les lentilles placées sur l'adaptateur (3) sont dans leur ensemble adaptées l'une à l'autre de manière que le facteur (valeur nominale) anamorphotique prescrit soit obtenu avec précision entre l'infini et la distance minimale de l'objet.

6. Adaptateur selon la revendication 1 ou 2, caractérisé en ce que le groupe de lentilles positives du premier système partiel (8) et le groupe de lentilles négatives du deuxième système partiel (7) sont disposés côte à côte et au moins une lentille négative de l'un des groupes (9 ou 13) est réunie avec la lentille positive adjacente de l'autre groupe (12 ou 10) pour former un groupe de lentilles (9, 12 ou 13, 10).

Fig. 1a

Fig. 1b

Fig. 2.1  Fig. 2.2  Fig. 2.3  Fig. 2.4  Fig. 2.5

$F_g = 200,00$
$F_x = 174,31$
$F_y = 227,99$
$S = -5954,56$
$V = 4/3$

Fig. 2.6

Fig. 2.7

Fig. 2.8

Fig. 2.9  Fig. 2.10  Fig. 2.11

Fig. 2

EP 0 388 704 B1

Fig. 3

EP 0 388 704 B1

Fig. 4.1   Fig. 4.2   Fig. 4.3   Fig. 4.4   Fig. 4.5

Fig. 4.6

Fig. 4.7

Fig. 4.8

$F_g$ = 123,27
$F_x$ = 104,11
$F_y$ = 137,38
S = − 4799,39
V = 4/3

Fig. 4.9   Fig. 4.10   Fig. 4.11

Fig. 4

EP 0 388 704 B1

Fig. 5.1  Fig. 5.2  Fig. 5.3  Fig. 5.4  Fig. 5.5  Fig. 5.6  Fig. 5.7  Fig. 5.8  Fig. 5.9  Fig. 5.10  Fig. 5.11

Fg = 100,0
Fx = 62,71
V = 2/1  Fy = 131,00
S = − 5811,04

Fig. 5

EP 0 388 704 B1